# EUROPEAN PATENT SPECIFICATION

(11) **EP 4 565 351 B1**
(45) Date of publication and mention of the grant of the patent: **08.07.2026**
(21) Application number: 23755153.6
(22) Date of filing: 21.07.2023
(51) Int. Cl.: B01D 61/18, B01D 61/20

(54) **MICROFILTRATION CONTAINER**
MIKROFILTRATIONSBEHÄLTER
RÉCIPIENT DE MICROFILTRATION

(30) Priority: 01.08.2022 IT 202200016296
(43) Date of publication of application: 11.06.2025
(73) Proprietor: RATTIINOX S.R.L., 22066 Mariano Comense (CO) (IT)
(72) Inventor: RATTI, Walter, 22066 Mariano Comense (COMO) (IT); SCHIAVELLA, Raffaele, 22066 Mariano Comense (COMO) (IT)
(74) Representative: Crippa, Paolo Ernesto
(86) International application number: PCT/IB2023/057455
(87) International publication number: WO 2024/028690

(56) References cited:
- EP-A2- 0 051 373
- WO-A1-2021/101614
- JP-A- H09 196 204
- US-A1- 2016 228 822

## Description

### Technical Field of the Invention

The present invention generally belongs to the field of microfiltration container bases, and relates to a microfiltration container comprising said base.

In particular, the present invention relates to a microfiltration container, mainly in the field of pharmaceutical applications, biotechnologies, microelectronics and applications requiring a filtration purification technology suitable and validated to obtain sterile, non-pyrogenic fluids with high purity.

### Background art

In pharmaceutical applications, as in many other production fields, the filtration, both sterilizing and for producing ultra-clean fluids, is now a widespread practice.

The first applications date back to the end of the last world war with the introduction of microporous membrane filters available with different retention levels. The membrane filter (hereinafter also simply "filter") appears in sheets and these are marketed in the form of discs or cartridges capable of covering applications that need only a few cm2 (in the form of discs) to several m2 (e.g., with cartridges with pleated membranes).

In order to be used, the filter needs to be installed in a filter-holder (hereinafter referred to as a "container"). Containers suited for both sheet filters and filtering cartridges are available.

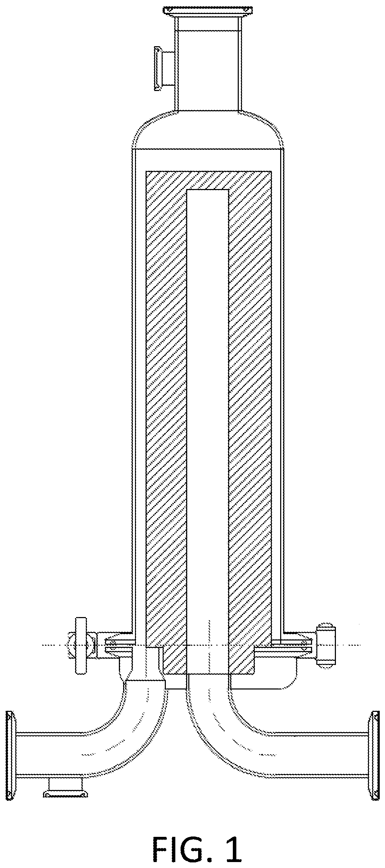

The prior-art container for cartridges (see Fig. 1), consists of a cartridge-holder "base" and a closing "bell" adapted to contain the microfiltration cartridge. An attachment is present in the base for coupling the microfiltering cartridge, as well as two pipes with curve(s), one for introducing the solution to be filtered, while the other curve is connected to the center of the filter-holder attachment and allows taking the fluid exiting from the inner central part of the filter.

A solution of this type is described, for example, in WO2021/101614, US2016/228822, GB2202164A and EP0051373.

In order to use these known microfiltering containers, the container needs to be equipped with a series of accessories and instruments so that the filtering barrier can produce and so that the microfiltration can be controlled and validated to achieve the object set by the process.

The use concerns both the filtration of liquid solutions (using hydrophilic filters) and the filtration of gases (using hydrophobic filters). There is a wide variety of containers and filters, which allows covering the most varied applications.

The container with accessories and instruments is the subject of a project the success of which depends on the attitude of the designers and finally on the installers. In particular, the choice of accessories and assembly modes are key aspects for the success of the project.

In particular, in order to fulfil the functions required by the process, the container with the filtering cartridge thereof should be provided with a series of accessories selected in the design stage, which allow the correct use thereof.

For example, at the inlet of the container, it can be necessary to connect:
- a shut-off valve on the inlet curve;
- a temperature sensor which reaches the interior of the filter;
- an upstream or inlet side drain valve, to allow the emptying, the drainage of steam during sterilization, the introduction of water for verifying the integrity of the hydrophobic filter.

For example, on the container closing bell it can be necessary to connect:
- a pressure sensor;
- an instrument adapted to verify the integrity of the hydrophobic filter;
- a valve for bleeding any air conveyed in the liquid;
- a shut-off valve of the connection towards the collection of condensates if the steam has to come out from the top of the bell during sterilization;

For example, at the outlet of the container, it can be necessary to connect:
- a shut-off valve on the outlet curve;
- a temperature sensor for reaching the interior of the filter;
- the option of sterilely sampling the filtrate immediately at the outlet of the filter and before the shut-off valve.

All these accessories are found on the market, and often unsuitable components for the application of the aseptic processing required in the pharmaceutical process or in microelectronics for high purity processes are connected.

These accessories can bring into the process:
- unused portions;
- asymptotic closures which are difficult to clean with the automatic "Cleaning in Place" washing technologies;
- valve drives in direct contact with the fluid to be purified;
- request for space about the container increasing the dead volume thereof in which the often very expensive product is kept;
- undesired pollution due to the introduction of measurement probes;
- pollution due to sample collection.

Therefore, in the field of pharmaceutical applications, biotechnologies and applications requiring a filtration purification technology suitable and validated to obtain sterile, non-pyrogenic fluids with high purity, especially in the presence of highly costly products, the need is strongly felt for the filtering container to be completely emptied at the end of the process.

In high technological content industries, a filtration container with features adapted to be used in such applications and provided with specifically studied and manufactured components allowing the process control thereof is not available.

In general, the known containers are equipped with components designed and manufactured for other applications and re-machined with specific connections, seals, electropolishing, controlled and certified roughness, etc., to be compliant with US Medical and Pharmaceutical standards, such as FDA, USP, 3A, BPE 2000, and EU, Japanese and Russian standards.

For industries working in the above fields, it is a key prerogative to keep, downstream of the filters, the same effluent fluid quality achieved with filtration up to the point of use, which is generally represented by the container in which it will be collected to be placed on the market.

Thus, the need is strongly felt to suggest a filter-holder container and in particular a base for this container, which is:
- compact;
- allows completely emptying the container when required without having residue stagnation zones;
- easy to produce;
- and allows aseptic processing in the pharmaceutical field or in the high purity process.

### Object and Summary of the Invention

Therefore, it is the object of the present invention to overcome the drawbacks of the prior art and allow the abovementioned needs to be met, by suggesting a microfilter-holder container base capable of ensuring the fulfillment of the aforesaid needs.

These and other objects are achieved by a microfiltration container as claimed in claim 1.

Some advantageous embodiments are the subject of the dependent claims.

By virtue of the general embodiment and variants described above and further described below, it is possible to obtain the following advantages.

The suggested base and the suggested microfiltration container allow using process control devices integrated with the base and the container, forming a compact and aseptic assembly, where the geometries, which make it aseptic are largely made in one piece, i.e., in a single piece, with the base.

The suggested solution allows having a container for filters, in the structure of which (mainly the filter-holder base and subordinately the closing bell) all the available accessories designed to fulfill the application for which they are intended and which serve to make the system functional are integrated into the body thereof.

In the suggested solution, the user will find an available filtration system provided with accessories.

This solution offers several advantages:
- smaller space than the solutions known to-date;
- performance quality devoid of stagnation points;
- use of specific components without unused portions and asymptotic closures;
- dedicated access ports for pressure and temperature probes;
- specific access ports for sample collection probes;
- all the control valves integrated into the base body;
- subordinately all the drain and ventilation valves and connection instruments on the bell;
- cleaning, decontamination along with container and filter;
- sterilization along with container and filter with in situ sensors.

In particular, the base of the container offers the possibility to receive all marketed types of cartridge and has a geometry which avoids product residue upstream of the cartridge at the end of filtration.

### Description of the Drawings

Further features and advantages of the invention will become apparent from the description provided below of preferred embodiments thereof, given by way of non-limiting indication, with reference to the accompanying drawings, in which:
- figure 1 shows a sectional side view according to a plane passing through a vertical and horizontal direction of a microfiltration container according to the prior art;
- figure 2 shows an axonometric view of a microfiltration container according to the present invention, where the fluid inlet pipe section is placed on the left and the fluid outlet pipe section is placed on the right, the shut-off valve of the downstream drain pipe section, thus downstream of the microfilter, is placed at the front and the shut-off valve of the upstream pipe, thus upstream of the microfilter, is placed at the back;

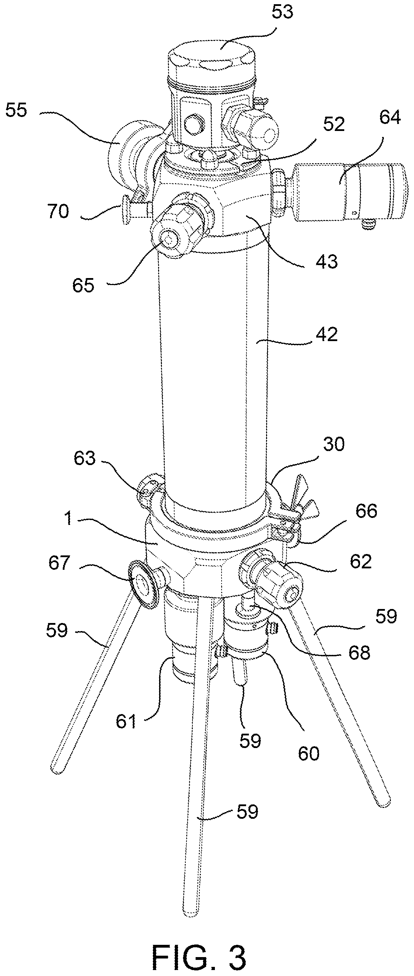

- figure 3 shows an axonometric view of a microfiltration container in figure 2, where the fluid inlet pipe section is placed on the right and the fluid outlet pipe section is placed on the left, the shut-off valve of the downstream drain pipe section, thus downstream of the microfilter, is placed at the back and the shut-off valve of the upstream pipe, thus upstream of the microfilter, is placed at the front;

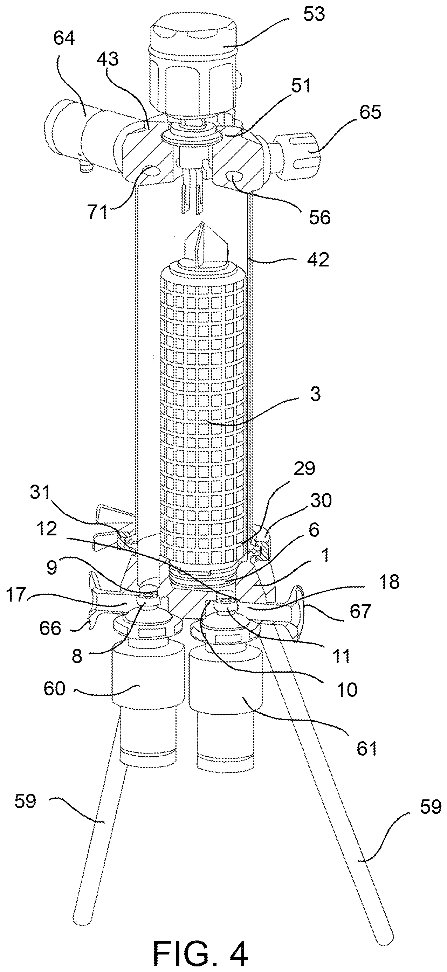

- figure 4 shows an axonometric view of the microfiltration container in figure 2, sectioned according to a vertical direction and a horizontal direction passing through the axis of the fluid inlet pipe section and the fluid outlet pipe section;

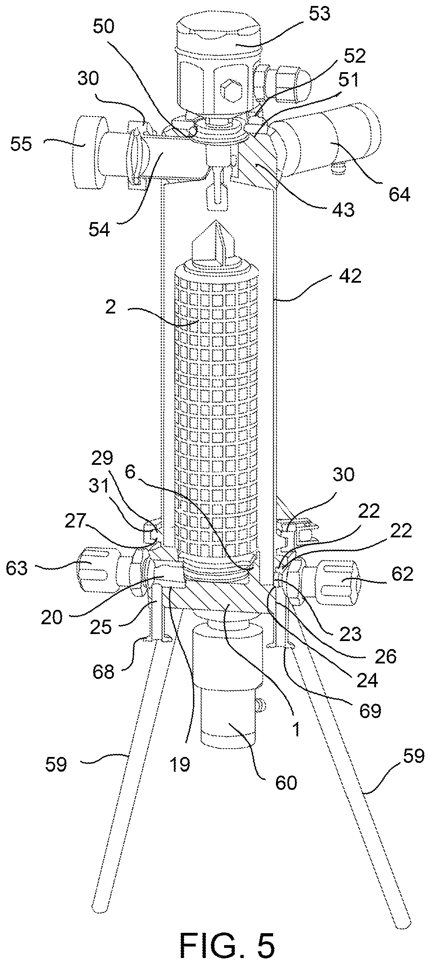

- figure 5 shows an axonometric view of the microfiltration container in figure 2, sectioned according to a vertical direction and a horizontal direction passing through the axis of the shut-off valves of the downstream drain pipes on the left and of the upstream drain pipes on the right;

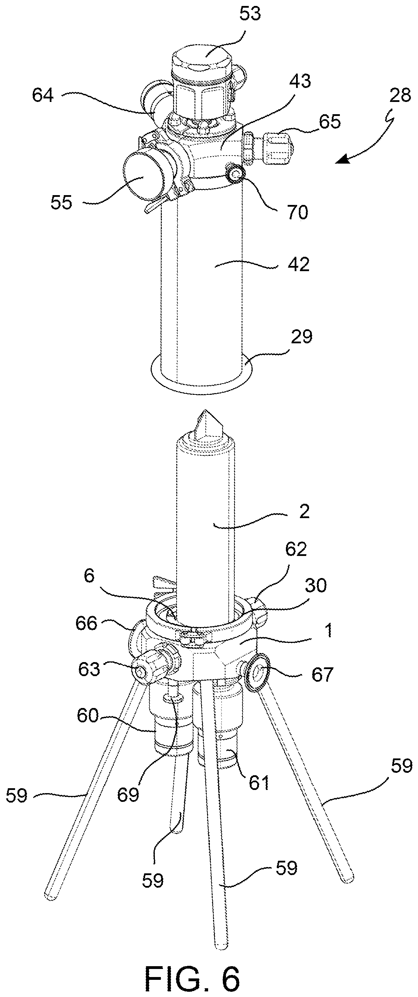

- figure 6 shows an axonometric view of the microfiltration container in figure 2 in the position shown in figure 5, with separate parts where the bell and the integral cap are raised to show the microfilter;

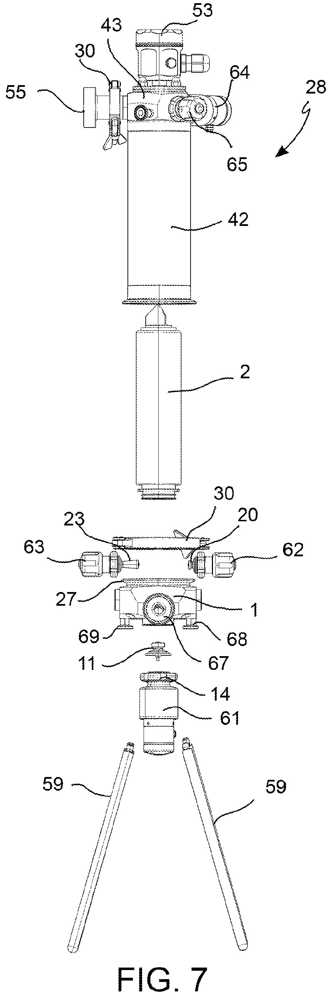

- figure 7 shows a front view of the microfiltration container in figure 2, with separate parts, namely the bell, the microfilter, the screw tightening clamp, shut-off valves of the downstream drain pipes on the left and upstream drain pipes on the right, the base, the movable valve element, the second outlet shut-off valve, container support legs;

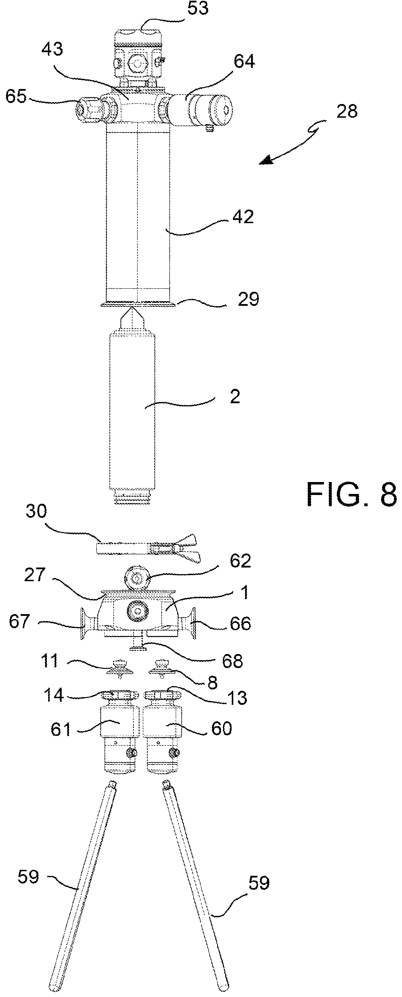

- figure 8 shows a view opposing the view in figure 7 of the microfiltration container in figure 2, with separate parts, namely the bell, the microfilter, the screw tightening clamp, sections of outlet pipes on the left and inlet pipes on the right obtained in the base, movable valve elements on the left for shutting-off the outlet pipe and on the right for shutting-off the inlet pipe, a second outlet shut-off valve on the left and a first inlet shut-off valve on the right, container support legs;

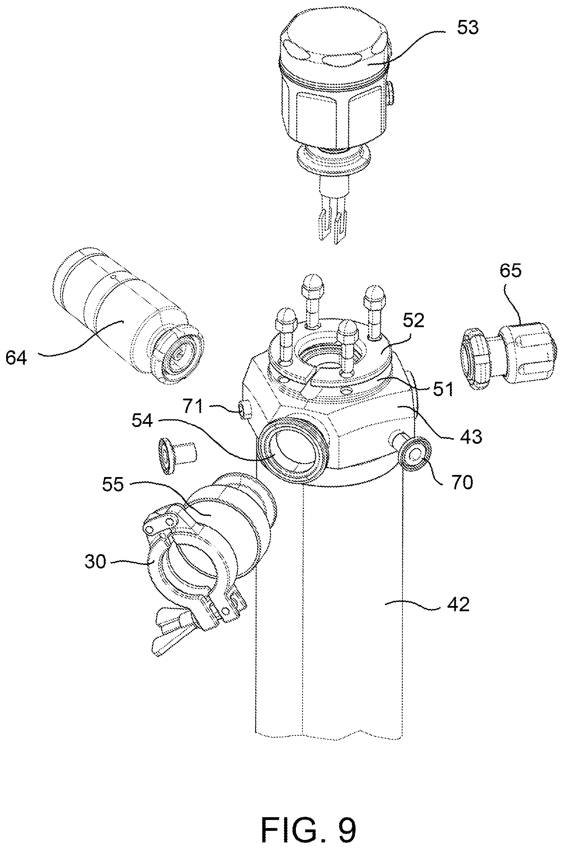

- figure 9 shows an axonometric view of the microfiltration container in figure 2, with separate parts of the upper bell part provided with the cap, namely in the clockwise direction, the manometer at the front, the ventilation pipe shut-off valve, the filter integration evaluation or integrity test pipe shut-off valve, and the level sensor at the top;

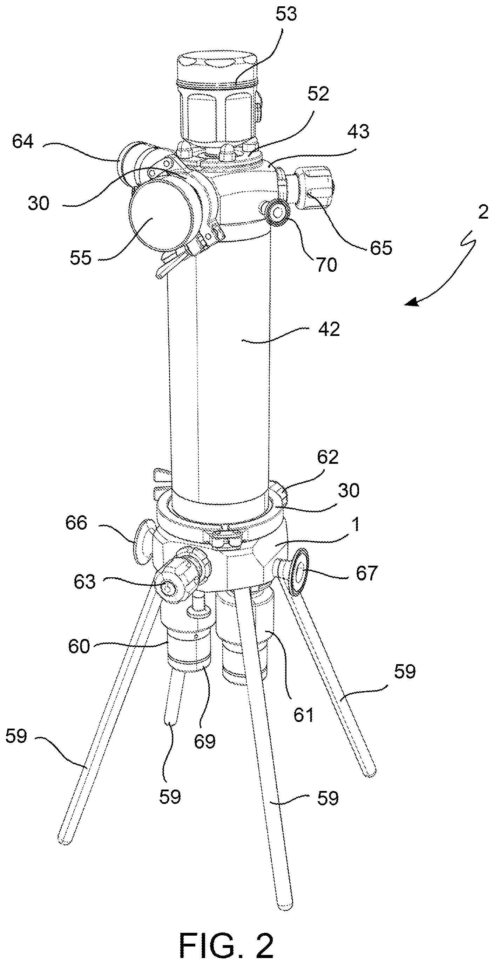

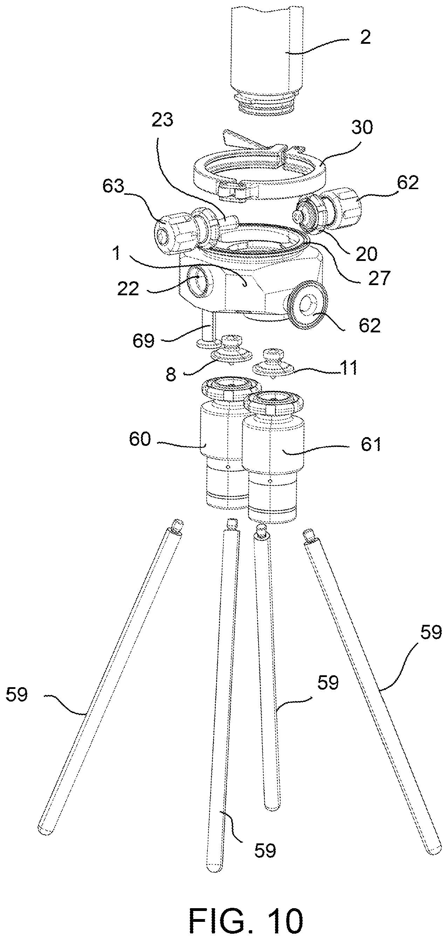

- figure 10 shows an axonometric view of the microfiltration container in figure 2, with separate parts of the lower part of the microfiltration container with, starting from the bottom, the four support legs, the first inlet shut-off valve on the left and the second outlet shut-off valve on the right, movable valve elements, on the right for shutting-off the outlet pipe and on the left for shutting-off the inlet pipe, the base, the shut-off valves of the downstream drain pipe on the left and of the upstream drain pipe on the right, the screw tightening clamp, the lower part with code connection 7 or bayonet coupling of the microfilter;

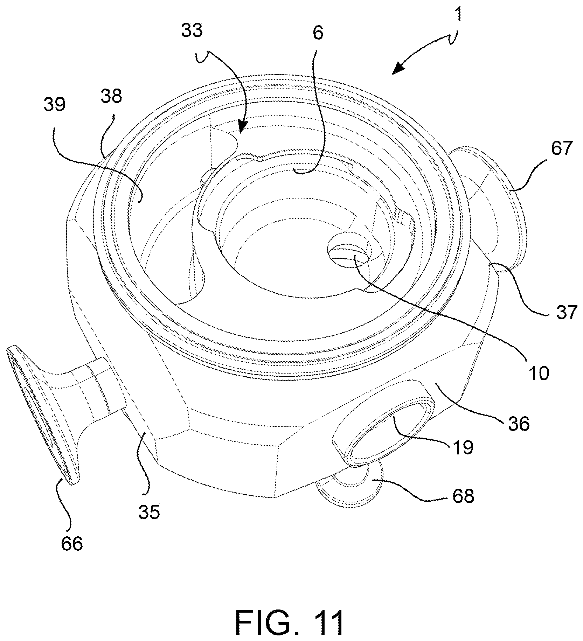

- figure 11 shows an axonometric top view of the base in a single piece, to which there are connected the inlet pipe flange on the left and the outlet pipe flange on the right and the flange of the downstream drain pipe frontally downwards;

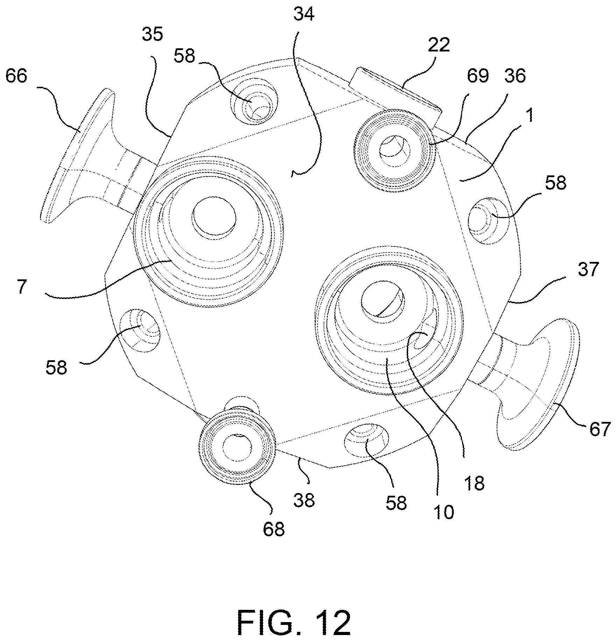

- figure 12 shows an axonometric bottom view of the base shown in figure 11;

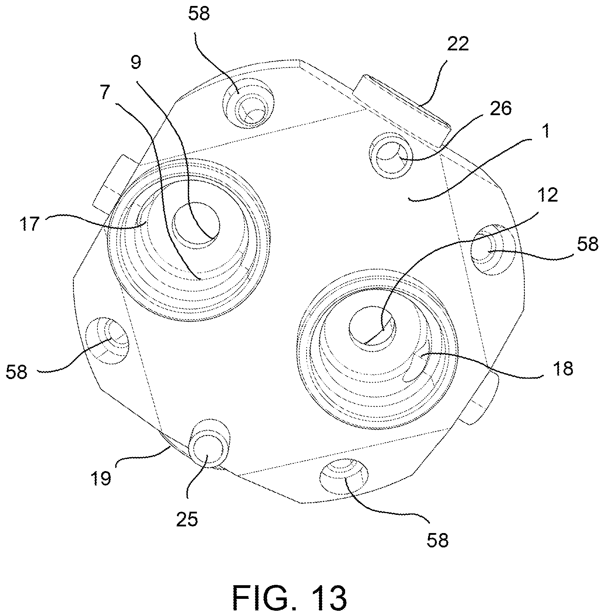

- figure 13 shows an axonometric bottom view of the base shown in figure 12, in which the connection flanges of the inlet and outlet pipes have been removed;

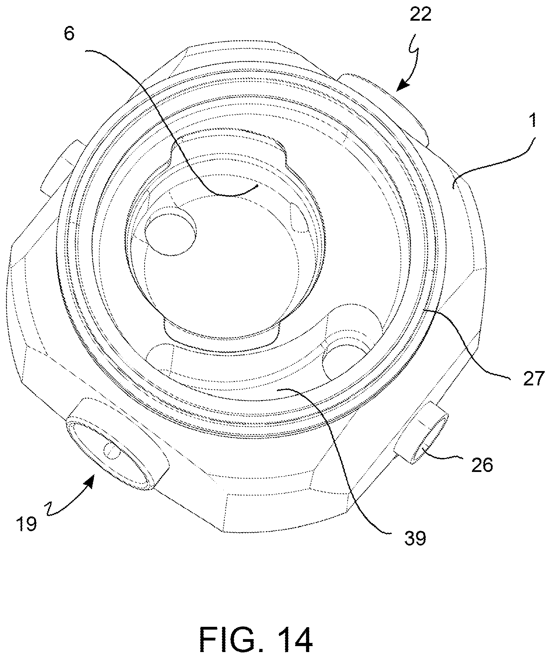

- figure 14 shows an axonometric top view of the base in figure 13;

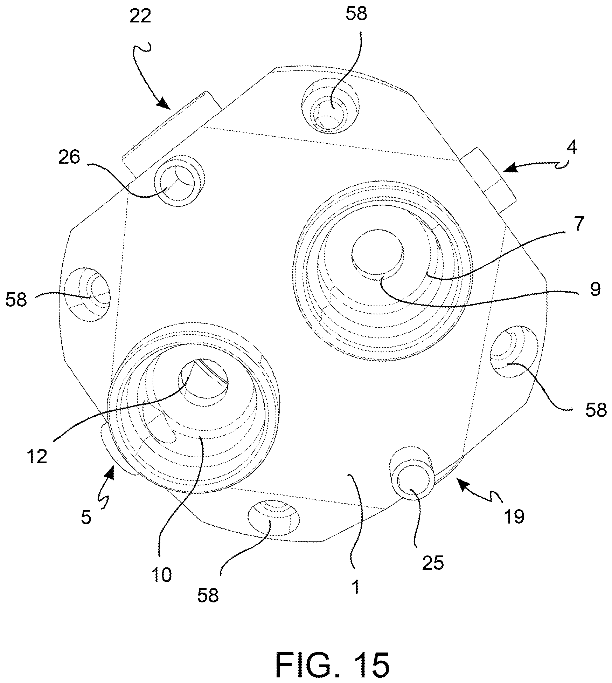

- figure 15 shows an axonometric bottom view of the base shown in figure 13 rotated by 90 degrees about the vertical axis thereof in normal use;

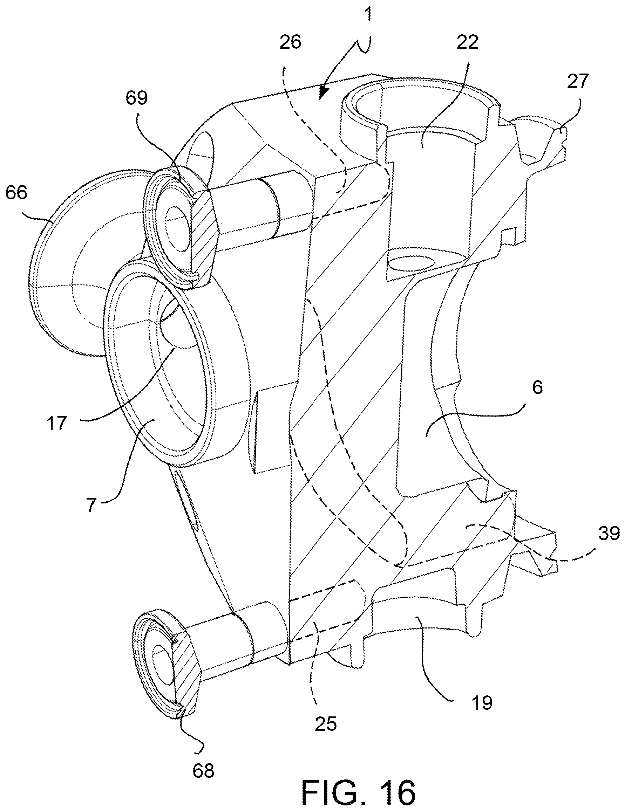

- figure 16 shows the base in figure 12, sectioned according to a plane passing through the vertical axis when in normal use (shown here almost horizontal) and the axis of the shut-off valves of the upstream and downstream drain pipes;

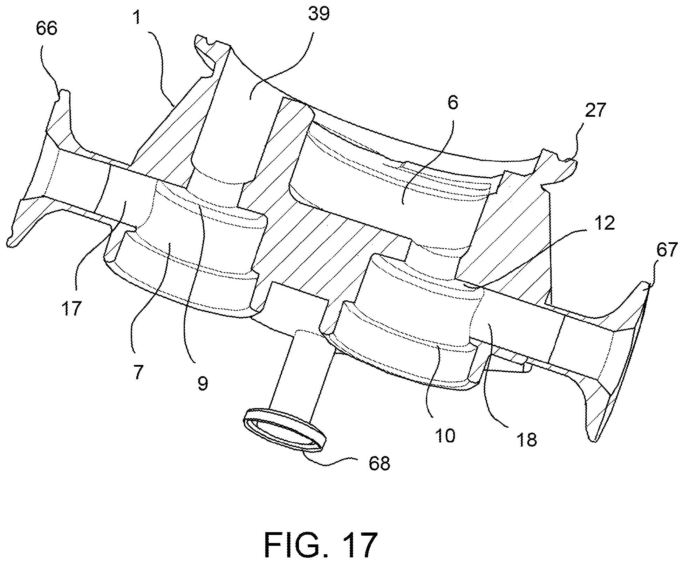

- figure 17 shows the base in figure 12, sectioned according to a plane passing through the vertical axis when in normal use (shown here almost vertical) and the axis of the shut-off valves of the inlet and outlet pipes;

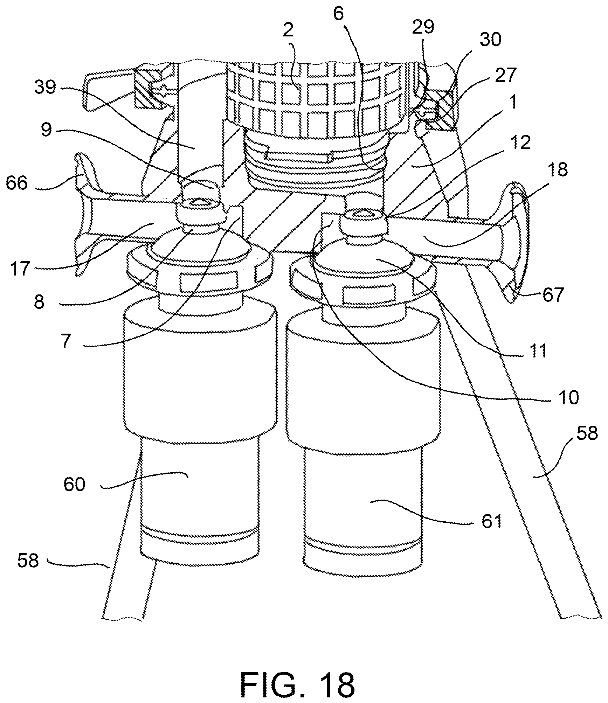

- figure 18 shows an axonometric sectioned view of the base in figure 17 mounted in the microfiltration container and in which the shut-off valves of the inlet pipes on the left and of the outlet pipes on the right are in the closed position and the cartridge microfilter is connected in the microfilter seat thereof to a code seat 7 with bayonet coupling;

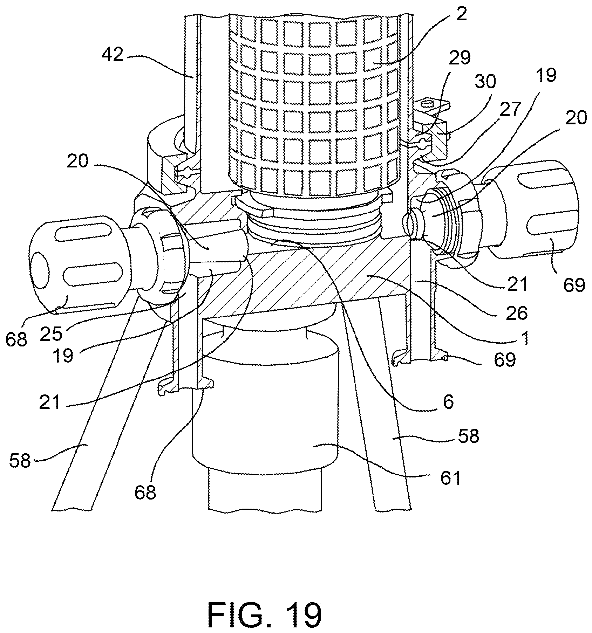

- figure 19 shows an axonometric sectioned view of the base in figure 16 mounted in the microfiltration container and in which the shut-off valves of the downstream drain pipes on the left and of the upstream drain pipes on the right are in the closed position and the cartridge microfilter is connected in the microfilter seat thereof to a code seat 7 with bayonet coupling;

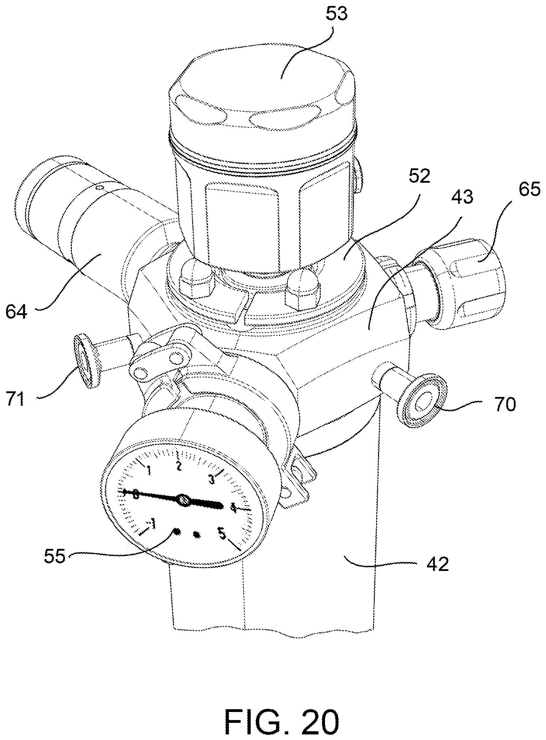

- figure 20 shows an axonometric view of the microfiltration container, in detail the bell provided with the cap associated with the manometer, placed at the front in the figure, the ventilation pipe shut-off valve on the left, the level measurement sensor at the top, and the integrity test pipe shut-off valve on the right;

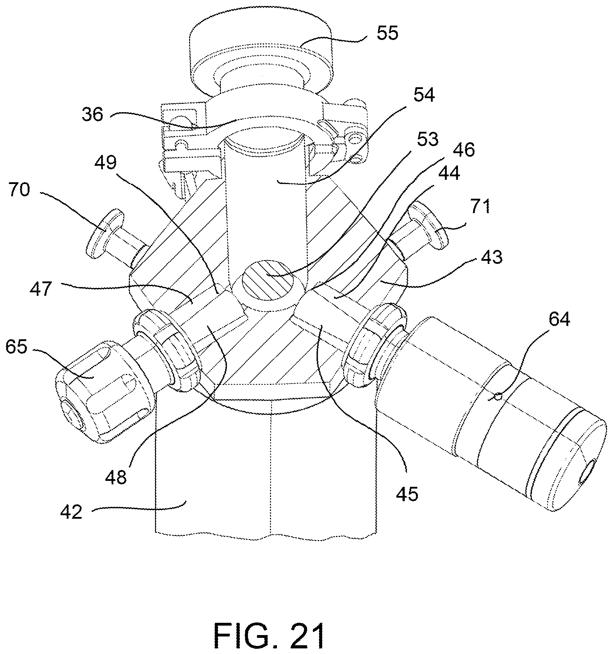

- figure 21 shows an axonometric view of a transverse section with respect to the vertical axis of the microfiltration container at the axes of ventilation pipe shut-off valve on the right, integrity test pipe shut-off valve on the left, and manometer pipe at the top, in which part of the level sensor is sectioned in the middle;

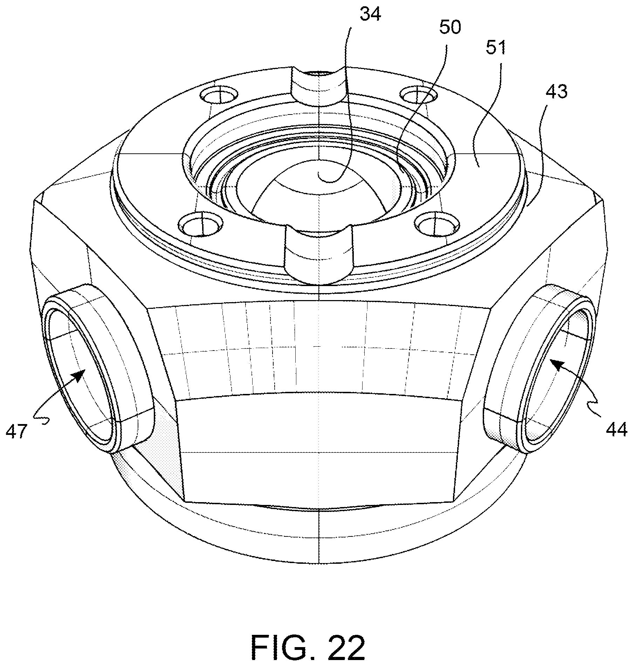

- figure 22 shows an axonometric view of the cap alone;

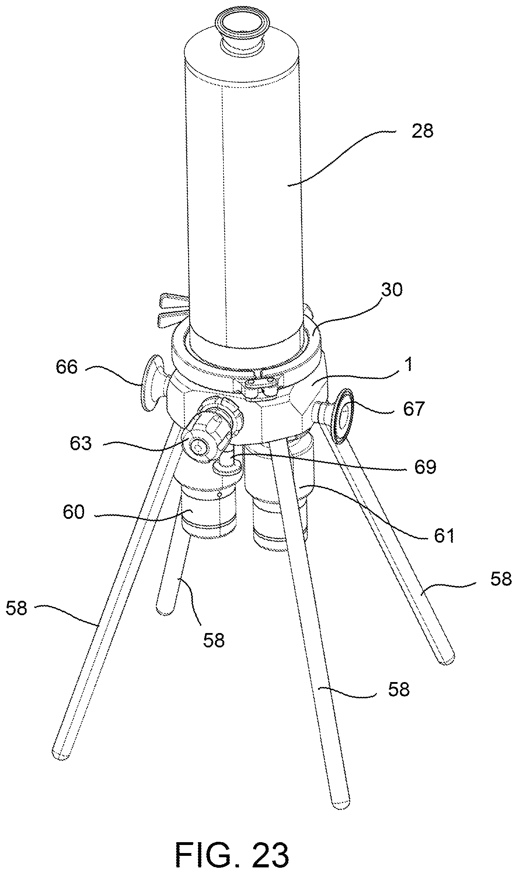

- figure 23 shows an axonometric view of a microfiltration container, where the base is made according to the present invention and the bell is provided with the cap thereof and a single upper connection, according to the prior art.

### Detailed Description of some preferred embodiments of the invention

The invention is defined in the appended set of claims.

The present invention will now be described in detail with reference to the accompanying drawings to allow those skilled in the art to make and use it. Various changes to the embodiments described will be readily apparent to those skilled in the art and the general principles described can be applied to other embodiments and applications without departing from the scope of protection of the present invention, as defined in the appended claims. Therefore, the present invention should not be considered as limited to the embodiments described and shown, but should be granted the broadest scope of protection in compliance with the features described and claimed.

Unless otherwise defined, all the technical and scientific terms used herein have the same meaning commonly used by those of ordinary skill in the field to which the present invention pertains. In case of a conflict, the present description, including the definitions provided, will be binding. Moreover, the examples are merely provided for illustrative purposes, and as such they should not be considered as limiting.

In order to facilitate the understanding of the embodiments described herein, reference will be made to some specific embodiments and a specific language will be used to describe them. The terminology used herein has the purpose of describing only particular embodiments, and is not intended to limit the scope of the present invention.

According to a general embodiment, a base for a microfiltration container 2 is indicated in the figures by reference numeral 1.

Said microfiltration container 2, or container, is adapted to contain at least one microfilter 3, e.g., a cylindrical cartridge with outer peripheral inlet and central outlet, and create fluid passages which force a fluid, passing from a fluid inlet 4 to a fluid outlet 5, to pass through said microfilter 3.

Said base 1 is a monolithic body, i.e., a body made in a single piece. For example, a metal monobloc machined by chip removal.

A microfilter seat 6 is obtained in said base 1 for accommodating and securing said at least one microfilter 3;
where at least a first valve half-chamber 7 8 is obtained in said base 1, adapted to accommodate a first movable valve element adapted to move from a valve opening position to a valve closing position.

Said at least a first valve half-chamber 7 comprises at least a first abutment surface 9 for sealing said movable valve element 8.

According to an embodiment, said first valve half-chamber 7 is a fluid inlet valve half-chamber.

According to a different embodiment, said first valve half-chamber is a fluid outlet valve half-chamber.

According to an embodiment, at least a second valve half-chamber 10 is obtained in said base 1, adapted to accommodate a second movable valve element 11 adapted to move from a valve opening position to a valve closing position.

According to an embodiment, said at least a second valve half-chamber 10 comprises at least a second abutment surface 12 for sealing said second movable valve element 11.

According to an embodiment, said second valve half-chamber 10 is a fluid outlet valve half-chamber.

According to a different embodiment, said second valve half-chamber is a fluid inlet valve half-chamber.

According to an embodiment, said first or second valve half-chamber 7 or 10 is adapted to be coupled to and sealed by a first or second valve counter-half-chamber 13 or 14 so as to form a first or a second chamber 15 or 16 of first or second valve accommodating said first or second movable valve element 8 or 11.

According to an embodiment, at least one fluid inlet or outlet pipe section 17 or 18 is obtained in said base 1.

According to an embodiment, said at least one fluid inlet or outlet pipe section 17 or 18 opens out into said first valve half-chamber 7.

According to an embodiment, at least one fluid inlet or outlet pipe section 18 or 17 is obtained in said base 1.

According to an embodiment, said at least one fluid inlet or outlet pipe section 18 or 17 opens out into said second valve half-chamber 10.

According to an embodiment, at least a third valve half-chamber 19 is obtained in said base 1, adapted to accommodate a third movable valve element 20 adapted to move from a valve opening position to a valve closing position.

According to an embodiment, said at least a third valve half-chamber 19 comprises at least a third abutment surface 21 for sealing said third movable valve element 20.

According to an embodiment, at least a third upstream drain valve half-chamber 19 is obtained in said base 1, adapted to accommodate a third movable valve element 20 adapted to move from a valve opening position to a valve closing position.

According to an embodiment, said at least a third upstream valve half-chamber 19 comprises at least a third abutment surface 21 for sealing said third movable valve element 20.

According to an embodiment, at least a fourth valve half-chamber 22 is obtained in said base 1, adapted to accommodate a fourth movable valve element 23 adapted to move from a valve opening position to a valve closing position.

According to an embodiment, said at least a fourth valve half-chamber 22 comprises at least a fourth abutment surface 24 for sealing said fourth movable valve element 20.

According to an embodiment, at least a fourth downstream valve half-chamber 22 is obtained in said base 1, adapted to accommodate a fourth movable valve element 23 adapted to move from a valve opening position to a valve closing position.

According to an embodiment, said at least a fourth downstream valve half-chamber 22 comprises at least a fourth abutment surface 24 for sealing said fourth movable valve element 20.

According to an embodiment, at least one upstream or downstream drain pipe section 25 or 26 is obtained in said base 1.

According to an embodiment, said at least one upstream or downstream drain pipe section 25 or 26 opens out into said third valve half-chamber (19).

According to an embodiment, at least one upstream or downstream drain pipe section 26 or 25 is obtained in said base 1.

According to an embodiment, said at least one upstream or downstream drain pipe section 26 or 25 opens out into said fourth valve half-chamber 22.

According to an embodiment, said base 1 comprises a base connection flange 27 for the connection with a container bell 28 to form the body of said microfiltration container 2.

According to an embodiment, said container bell 28 comprises a movable connection counter-flange 29 adapted to face said base connection flange 27.

According to an embodiment, said flange and counter-flange 27, 29 are circled by at least one screw tightening clamp 30, which accommodates said flange and counter-flange 27, 29 in an upside down "V"-shaped groove 31 thereof, e.g., a Vband - adjustable clamp of the I-bolt scaffold clamp / swivel coupler type.

According to an embodiment, said base 1 comprises a peripheral sleeve 32, an upper container bottom surface 33, an outer lower surface 34.

According to an embodiment, said peripheral sleeve 32 comprises four levelings 35, 36, 37, 38 opposed two by two.

According to an embodiment, a fluid inlet pipe section 17 and a fluid outlet pipe section 18 are provided in two opposing levelings 35, 37.

According to an embodiment, a third valve half-chamber 19 and a fourth valve half-chamber 22 open out into two opposing levelings 36, 38.

According to an embodiment, a first valve half-chamber 7 and a second valve half-chamber 10 open out into said upper container bottom surface 33.

According to an embodiment, the microfilter seat 6 opens out into said upper container bottom surface 33 and is fluidly connected to said second valve half-chamber 10.

According to an embodiment, said upstream drain pipe section 25 and said downstream drain pipe section 26 open out into said outer lower surface 34.

According to an embodiment, said upstream drain pipe section 25 is fluidly connected to said third valve half-chamber 19.

According to an embodiment, said downstream drain pipe section 26 is fluidly connected to said fourth valve half-chamber 22.

According to an embodiment, said base 1 comprises a peripheral channel 39, which fluidly connects said third valve half-chamber 19 and said first valve half-chamber 7.

According to an embodiment, each valve half-chamber 7, 10, 19, 22 is sealed by a valve counter-half-chamber 13, 14, 40, 41 connected by means of a threaded flange.

According to an embodiment, when the base 1 is in the use position, each valve half-chamber 7, 10, 19, 22 and/or each valve counter-half-chamber 13, 14, 40, 41 has aseptic geometries, i.e., capable of draining every minimum amount of fluid or, in other words, devoid of fluid stagnation zones.

According to an embodiment, when the base 1 is in the use position, each pipe section 17, 18, 25, 26 has aseptic geometries, i.e., capable of draining every minimum amount of fluid or, in other words, devoid of fluid stagnation zones.

The present invention also relates to a microfiltration container 2 comprising a base 1 according to any one of the above-described embodiments.

According to an embodiment, said microfiltration container 2 comprises a container bell 28.

According to an embodiment, said container bell 28 comprises a cylindrical bell body 42 in which a first lower end thereof is sealingly connectable to said base 1 and in which an upper opposite end thereof is closed by a bell cap 43.

According to an embodiment, said cylindrical bell body 42 and bell cap 43 are firmly connected to form a single piece.

According to an embodiment, said bell cap 43 is a monolithic body, i.e., made in a single piece.

According to an embodiment, at least a fifth valve half-chamber 44 is obtained in said bell cap 43, adapted to accommodate a fifth movable valve element 45 adapted to move from a valve opening position to a valve closing position.

According to an embodiment, said at least a fifth valve half-chamber 43 comprises at least a fifth abutment surface 46 for sealing said fifth movable valve element 45.

According to an embodiment, at least a sixth valve half-chamber 47 is obtained in said bell cap 43, adapted to accommodate a sixth movable valve element 48 adapted to move from a valve opening position to a valve closing position.

According to an embodiment, said at least a sixth valve half-chamber 47 comprises at least a sixth abutment surface 49 for sealing said sixth movable valve element 48.

According to an embodiment, at least one level sensor chamber 50 is obtained in said bell cap 43, comprising a level sensor connection flange 51 for the connection with a clamp connection adapter unit 52, i.e., a Zero Dead Leg connection flange, or ZDL connection, and is adapted to connect a level sensor 53.

According to an embodiment, at least one manometer connection pipe 54 is obtained in said bell cap 43 for the connection of a manometer 55.

According to an embodiment, at least one integrity test pipe section 56 is obtained in said bell cap 43.

According to an embodiment, said at least one integrity test pipe section 56 is fluidly connected to said sixth valve half-chamber 47.

According to an embodiment, when said base 1 is connected to said container bell 28, it delimits an inner microfilter chamber 57 which accommodates at least one microfilter 3 which separates said fluid inlet pipe section 17 from said fluid outlet pipe section 18.

According to an embodiment, said base 1 comprises at least one blind seat 58 for the connection of a container support leg 59.

In order to meet specific, contingent needs, those skilled in the art may make several changes and adaptations to the above-described embodiments and replace elements with others which are functionally equivalent, without however departing from the scope of the following claims.

According to an embodiment, when the base is not mounted, the microfilter seat 6 is obtained in the base 1 facing outwards from the opposite side with respect to how the first abutment surface 9 faces outwards.

According to an embodiment, when the base is not mounted, the microfilter seat 6 is obtained in the base 1 facing outwards towards different directions with respect to how the first abutment surface 9 faces outwards.

According to an embodiment, the first movable valve element 8 is accommodated in the first valve half-chamber 7 so as to move along a first movable valve element translation path to abut on the first abutment surface 9.

According to an embodiment, the microfilter seat 6 differs from the first abutment surface 9.

### REFERENCE NUMERALS

- 1: base
- 2: microfiltration container
- 3: microfilter
- 4: fluid inlet
- 5: fluid outlet
- 6: microfilter seat, e.g., a code seat 7 - bayonet coupling
- 7: first inlet or valve half-chamber
- 8: first movable valve element
- 9: first abutment surface
- 10: second outlet or valve half-chamber
- 11: second movable valve element
- 12: second abutment surface
- 13: first valve counter-half-chamber
- 14: second valve counter-half-chamber
- 15: first chamber of first valve
- 16: second chamber of second valve
- 17: fluid inlet pipe section
- 18: fluid outlet pipe section
- 19: third upstream drain or valve half-chamber
- 20: third movable valve element
- 21: third abutment surface
- 22: fourth downstream drain or valve half-chamber
- 23: fourth movable valve element
- 24: fourth abutment surface
- 25: upstream drain pipe section
- 26: downstream drain pipe section
- 27: base connection flange
- 28: container bell
- 29: movable bell connection counter-flange
- 30: screw tightening clamp
- 31: upside down "V"-shaped groove
- 32: peripheral sleeve
- 33: upper container bottom surface
- 34: outer lower surface
- 35: sleeve leveling
- 36: sleeve leveling
- 37: sleeve leveling
- 38: sleeve leveling
- 39: peripheral channel
- 40: third valve counter-half-chamber
- 41: fourth valve counter-half-chamber
- 42: cylindrical bell body
- 43: bell cap
- 44: fifth ventilation or valve half-chamber
- 45: fifth movable valve element
- 46: fifth abutment surface
- 47: sixth integrity test or valve half-chamber
- 48: sixth movable valve element
- 49: sixth abutment surface
- 50: level sensor chamber
- 51: level sensor connection flange
- 52: clamp connection adapter unit
- 53: level sensor
- 54: manometer connection pipe
- 55: manometer
- 56: integrity test pipe section
- 57: inner microfilter chamber
- 58: blind seat
- 59: container support leg
- 60: inlet valve
- 61: outlet valve
- 62: upstream drain valve
- 63: downstream drain valve
- 64: ventilation valve
- 65: integrity test valve
- 66: inlet connection
- 67: outlet connection
- 68: upstream drain connection
- 69: downstream drain connection
- 70: integrity test pipe connection
- 71: ventilation pipe section

## Claims

1. A microfiltration container (2) comprising a base (1) for a microfiltration container (2), said container contains at least one microfilter (3) and creates fluid passages which force a fluid, passing from a fluid inlet (4) to a fluid outlet (5), to pass through said microfilter (3);
wherein said base (1) is a monolithic body, i.e., made in a single piece;
wherein said base (1) comprising a microfilter seat (6) for accommodating and securing said at least one microfilter (3);
wherein said at least one microfilter (3) is accommodated into said seat (6);
wherein said microfiltration container (2) comprises a valve (60, 61, 62, 63, 64, 65);
said valve (60, 61, 62, 63, 64, 65) has a first valve half-chamber (7) and a first movable valve element (8) adapted to move from a valve opening position to a valve closing position;
wherein said at least a first valve half-chamber (7) is obtained in said base (1) and accommodates said first movable valve element (8);
wherein said at least a first valve half-chamber (7) comprises at least a first abutment surface (9) for sealing said movable valve element (8);
wherein said microfiltration container (2) comprises a container bell (28);
wherein said container bell (28) comprises a cylindrical bell body (42) in which a first lower end thereof is sealingly connectable to said base (1) and in which an upper opposite end thereof is closed by a bell cap (43);
**characterized in that**
the microfilter seat (6) is obtained in the base (1) facing the opposite side with respect to the first abutment surface (9) that faces outwards.

2. A microfiltration container (2), according to claim 1,
wherein said first valve half-chamber (7) is a fluid inlet valve half-chamber;
or wherein
- said first valve half-chamber is a fluid outlet valve half-chamber

3. A microfiltration container (1), according to claim 1 or 2,
wherein at least a second valve half-chamber (10) is obtained in said base (1), adapted to accommodate a second movable valve element (11) adapted to move from a valve opening position to a valve closing position;
wherein said at least a second valve half-chamber (10) comprises at least a second abutment surface (12) for sealing said second movable valve element (11).

4. A microfiltration container (1) according to the preceding claim,
wherein said second valve half-chamber (10) is a fluid outlet valve half-chamber;
or wherein
- said second valve half-chamber is a fluid inlet valve half-chamber.

5. A microfiltration container (1) according to any one of claims 3 or 4,
said first or second valve half-chamber (7 or 10) is adapted to be coupled to and sealed by a first or second valve counter-half-chamber (13 or 14) so as to form a first or second chamber (15 or 16) of first or second valve accommodating said first or second movable valve element (8 or 11).

6. A microfiltration container (1) according to any one of claims 3 to 5,
wherein at least one fluid inlet or outlet pipe section (17 or 18) is obtained in said base (1);
and wherein said at least one fluid inlet or outlet pipe section (17 or 18) opens out into said first valve half-chamber (7);
or
wherein at least one fluid outlet or inlet pipe section (18 or 17) is obtained in said base (1);
and wherein said at least one fluid outlet or inlet pipe section (18 or 17) opens out into said second valve half-chamber (10).

7. A microfiltration container (1) according to any one of the preceding claims,
wherein at least a third valve half-chamber (19) is obtained in said base (1), adapted to accommodate a third movable valve element (20) adapted to move from a valve opening position to a valve closing position;
wherein said at least a third valve half-chamber (19) comprises at least a third abutment surface (21) for sealing said third movable valve element (20);
or wherein
wherein at least a third upstream drain valve half-chamber (19) is obtained in said base (1), adapted to accommodate a third movable valve element (20) adapted to move from a valve opening position to a valve closing position;
wherein said at least a third upstream valve half-chamber (19) comprises at least a third abutment surface (21) for sealing said third movable valve element (20).

8. A microfiltration container (1) according to any one of the preceding claims,
wherein at least a fourth valve half-chamber (22) is obtained in said base (1), adapted to accommodate a fourth movable valve element (23) adapted to move from a valve opening position to a valve closing position;
wherein said at least a fourth valve half-chamber (22) comprises at least a fourth abutment surface (24) for sealing said fourth movable valve element (20);
or wherein
wherein at least a fourth downstream valve half-chamber (22) is obtained in said base (1), adapted to accommodate a fourth movable valve element (23) adapted to move from a valve opening position to a valve closing position;
wherein said at least a fourth downstream valve half-chamber (22) comprises at least a fourth abutment surface (24) for sealing said fourth movable valve element (20).

9. A microfiltration container (1) according to any one of claims 7 or 8,
wherein at least one upstream or downstream drain pipe section (25 or 26) is obtained in said base (1);
and wherein said at least one upstream or downstream drain pipe section (25 or 26) opens out into said third valve half-chamber (19);
or
wherein at least one downstream or upstream drain pipe section (26 or 25) is obtained in said base (1);
and wherein said at least one downstream or upstream drain pipe section (26 or 25) opens out into said fourth valve half-chamber (22).

10. A microfiltration container (1) according to any one of the preceding claims,
wherein said base (1) comprises a base connection flange (27) for the connection with a container bell (28) to form the body of said microfiltration container (2);
and wherein said container bell (28) comprises a movable connection counter-flange (29) adapted to face said base connection flange (27);
and wherein said flange and counter-flange (27, 29) are circled by at least one screw tightening clamp (30), which accommodates said flange and counter-flange (27, 29) in an upside down "V" shaped groove (31) thereof, e.g., a Vband - adjustable clamp of the I-bolt scaffold clamp / swivel coupler type.

11. A microfiltration container (1) according to any one of the preceding claims,
wherein said base (1) comprises a peripheral sleeve (32), an upper container bottom surface (33), an outer lower surface (34);
and wherein
said peripheral sleeve (32) comprises four levelings (35, 36, 37, 38) opposed two by two;
and wherein a fluid inlet pipe section (17) and a fluid outlet pipe section (18) are provided in two opposing levelings (35, 37);
and wherein a third valve half-chamber (19) and a fourth valve half-chamber (22) open out into two opposing levelings (36, 38);
and wherein a first valve half-chamber (7) and a second valve half-chamber (10) open out into said upper container bottom surface (33);
and wherein the microfilter seat (6) opens out into said upper container bottom surface (33) and is fluidly connected to said second valve half-chamber (10).

12. A microfiltration container (1) according to any one of claims 9 and 11,
wherein said upstream drain pipe section (25) and said downstream drain pipe section (26) open out into said outer lower surface (34);
and wherein said upstream drain pipe section (25) is fluidly connected to said third valve half-chamber (19);
and wherein said downstream drain pipe section (26) is fluidly connected to said fourth valve half-chamber (22).

13. A microfiltration container (1) according to claim 7,
wherein said base (1) comprises a peripheral channel (39), which fluidly connects said third valve half-chamber (19) and said first valve half-chamber (7).

14. A microfiltration container (1) according to any one of the preceding claims,
wherein each valve half-chamber (7, 10, 19, 22) is sealed by a valve counter-half-chamber (13, 14, 40, 41) connected by means of a threaded flange.

15. A microfiltration container (1) according to any one of the preceding claims,
wherein, when the base (1) is in the use position, each valve half-chamber (7, 10, 19, 22) and/or each valve counter-half-chamber (13, 14, 40, 41) has aseptic geometries, i.e., capable of draining every minimum amount of fluid, i.e., devoid of fluid stagnation zones.

16. A microfiltration container (1), according to any one of claims 6 to 13,
wherein, when the base (1) is in the use position, each pipe section (17, 18, 25, 26) has aseptic geometries, i.e., capable of draining every minimum amount of fluid, i.e., devoid of fluid stagnation zones.

17. A microfiltration container (2) according to any one of the preceding claims,
wherein said cylindrical bell body (42) and bell cap (43) are firmly connected to form a single piece.

18. A microfiltration container (2) according to any one of the preceding claims,
wherein said bell cap (43) is a monolithic body, i.e., made in a single piece;
wherein at least a fifth valve half-chamber (44) is obtained in said bell cap (43), adapted to accommodate a fifth movable valve element (45) adapted to move from a valve opening position to a valve closing position;
wherein said at least a fifth valve half-chamber (43) comprises at least a fifth abutment surface (46) for sealing said fifth movable valve element (45).

19. A microfiltration container (2) according to any one of the preceding claims,
wherein said bell cap (43) is a monolithic body, i.e., made in a single piece;
wherein at least a sixth valve half-chamber (47) is obtained in said bell cap (43), adapted to accommodate a sixth movable valve element (48) adapted to move from a valve opening position to a valve closing position;
wherein said at least a sixth valve half-chamber (47) comprises at least a sixth abutment surface (49) for sealing said sixth movable valve element (48).

20. A microfiltration container (2) according to any one of the preceding claims,
wherein said bell cap (43) is a monolithic body, i.e., made in a single piece;
wherein at least one level sensor chamber (50) is obtained in said bell cap (43), comprising a level sensor connection flange (51) for the connection with a clamp connection adapter unit (52), i.e., a Zero Dead Leg connection flange, or ZDL connection, and adapted to connect a level sensor (53).

21. A microfiltration container (2) according to any one of the preceding claims,
wherein said bell cap (43) is a monolithic body, i.e., made in a single piece;
wherein at least one manometer connection pipe (54) is obtained in said bell cap (43) for the connection of a manometer (55).

22. A microfiltration container (2) according to any one of the preceding claims,
wherein said bell cap (43) is a monolithic body, i.e., made in a single piece;
wherein at least one integrity test pipe section (56) is obtained in said bell cap (43);
wherein said at least one integrity test pipe section (56) is fluidly connected to said sixth valve half-chamber (47).

23. A microfiltration container (2) according to any one of the preceding claims,
wherein, when said base (1) is connected to said container bell (28), it delimits an inner microfilter chamber (57) which accommodates at least one microfilter (3) which separates said fluid inlet pipe section (17) from said fluid outlet pipe section (18).

24. A microfiltration container (2) according to any one of the preceding claims,
wherein said base (1) comprises at least one blind seat (58) for the connection of a container support leg (59).

25. A microfiltration container (2) according to any one of the preceding claims,
wherein, when the base is not mounted, the microfilter seat (6) is disposed in the base (1) facing outwards from the opposite side with respect to how the first abutment surface (9) faces outwards.

26. A microfiltration container (2) according to any one of the preceding claims,
wherein, when the base is not mounted, the microfilter seat (6) is disposed in the base (1) facing outwards towards different directions with respect to how the first abutment surface (9) faces outwards.

27. A microfiltration container (2) according to any one of the preceding claims,
wherein, the first movable valve element (8) is accommodated in the first valve half-chamber (7) so as to move along a first movable valve element translation path to abut on the first abutment surface (9).

28. A microfiltration container (2) according to any one of the preceding claims,
wherein, the microfilter seat (6) differs from the first abutment surface (9).

## Patentansprüche

1. Mikrofiltrationsbehälter (2), der einen Sockel (1) für einen Mikrofiltrationsbehälter (2) umfasst, wobei der Behälter mindestens einen Mikrofilter (3) enthält und Fluiddurchgänge erzeugt, die ein von einem Fluideinlass (4) zu einem Fluidauslass (5) strömendes Fluid dazu zwingen, durch den Mikrofilter (3) zu strömen;
wobei der Sockel (1) ein monolithischer Körper ist, d. h. aus einem Stück gefertigt ist;
wobei der Sockel (1) einen Mikrofiltersitz (6) zur Aufnahme und Befestigung des mindestens einen Mikrofilters (3) umfasst;
wobei der mindestens eine Mikrofilter (3) in dem Sitz (6) aufgenommen ist;
wobei der Mikrofiltrationsbehälter (2) ein Ventil (60, 61, 62, 63, 64, 65) umfasst;
das Ventil (60, 61, 62, 63, 64, 65) eine erste Ventilkammerhälfte (7) und ein erstes bewegliches Ventilelement (8) aufweist, das dazu ausgelegt ist, sich von einer Ventilöffnungsposition in eine Ventilschließposition zu bewegen;
wobei die mindestens eine erste Ventilkammerhälfte (7) in dem Sockel (1) ausgebildet ist und das erste bewegliche Ventilelement (8) aufnimmt;
wobei die mindestens eine erste Ventilkammerhälfte (7) mindestens eine erste Anlagefläche (9) zum Abdichten des beweglichen Ventilelements (8) umfasst;
wobei der Mikrofiltrationsbehälter (2) eine Behälterglocke (28) umfasst;
wobei die Behälterglocke (28) einen zylindrischen Glockenkörper (42) umfasst, dessen erstes unteres Ende dichtend mit dem Sockel (1) verbindbar ist und dessen oberes, gegenüberliegendes Ende durch eine Glockenkappe (43) verschlossen ist;
**dadurch gekennzeichnet, dass**
der Mikrofiltersitz (6) in dem Sockel (1) auf der der ersten, nach außen gewandten Anlagefläche (9) gegenüberliegenden Seite ausgebildet ist.

2. Mikrofiltrationsbehälter (2) nach Anspruch 1,
wobei die erste Ventilkammerhälfte (7) eine Fluideinlass-Ventilkammerhälfte ist;
oder wobei
- die erste Ventilkammerhälfte eine Fluidauslass-Ventilkammerhälfte ist.

3. Mikrofiltrationsbehälter (2) nach Anspruch 1 oder 2,
wobei mindestens eine zweite Ventilkammerhälfte (10) in dem Sockel (1) ausgebildet ist, die zur Aufnahme eines zweiten beweglichen Ventilelements (11) ausgelegt ist, das dazu ausgelegt ist, sich von einer Ventilöffnungsposition in eine Ventilschließposition zu bewegen;
wobei die mindestens eine zweite Ventilkammerhälfte (10) mindestens eine zweite Anlagefläche (12) zum Abdichten des zweiten beweglichen Ventilelements (11) umfasst.

4. Mikrofiltrationsbehälter (1) nach dem vorhergehenden Anspruch,
wobei die zweite Ventilkammerhälfte (10) eine Fluidauslass-Ventilkammerhälfte ist;
oder wobei
- die zweite Ventilkammerhälfte eine Fluideinlass-Ventilkammerhälfte ist.

5. Mikrofiltrationsbehälter (1) nach einem der Ansprüche 3 oder 4,
wobei die erste oder zweite Ventilkammerhälfte (7 oder 10) dazu ausgelegt ist, mit einer ersten oder zweiten Ventilgegenkammerhälfte (13 oder 14) gekoppelt und durch diese abgedichtet zu sein, um eine erste oder zweite Kammer (15 oder 16) des ersten oder zweiten Ventils zu bilden, die das erste oder zweite bewegliche Ventilelement (8 oder 11) aufnimmt.

6. Mikrofiltrationsbehälter (1) nach einem der Ansprüche 3 bis 5,
wobei in dem Sockel (1) mindestens ein Fluideinlass- oder - auslassrohrabschnitt (17 oder 18) ausgebildet ist;
und wobei der mindestens eine Fluideinlass- oder - auslassrohrabschnitt (17 oder 18) in die erste Ventilkammerhälfte (7) mündet;
oder
wobei in dem Sockel (1) mindestens ein Fluidauslass- oder - einlassrohrabschnitt (18 oder 17) ausgebildet ist;
und wobei der mindestens eine Fluidauslass- oder - einlassrohrabschnitt (18 oder 17) in die zweite Ventilkammerhälfte (10) mündet.

7. Mikrofiltrationsbehälter (1) nach einem der vorhergehenden Ansprüche,
wobei mindestens eine dritte Ventilkammerhälfte (19) in dem Sockel (1) ausgebildet ist, die zur Aufnahme eines dritten beweglichen Ventilelements (20) ausgelegt ist, das dazu ausgelegt ist, sich von einer Ventilöffnungsposition in eine Ventilschließposition zu bewegen;
wobei die mindestens eine dritte Ventilkammerhälfte (19) mindestens eine dritte Anlagefläche (21) zum Abdichten des dritten beweglichen Ventilelements (20) umfasst;
oder wobei
mindestens eine dritte stromaufwärtige Ablassventilkammerhälfte (19) in dem Sockel (1) ausgebildet ist, die zur Aufnahme eines dritten beweglichen Ventilelements (20) ausgelegt ist, das dazu ausgelegt ist, sich von einer Ventilöffnungsposition in eine Ventilschließposition zu bewegen;
wobei die mindestens eine dritte stromaufwärtige Ventilkammerhälfte (19) mindestens eine dritte Anlagefläche (21) zum Abdichten des dritten beweglichen Ventilelements (20) umfasst.

8. Mikrofiltrationsbehälter (1) nach einem der vorhergehenden Ansprüche,
wobei mindestens eine vierte Ventilkammerhälfte (22) in dem Sockel (1) ausgebildet ist, die zur Aufnahme eines vierten beweglichen Ventilelements (23) ausgelegt ist, das dazu ausgelegt ist, sich von einer Ventilöffnungsposition in eine Ventilschließposition zu bewegen;
wobei die mindestens eine vierte Ventilkammerhälfte (22) mindestens eine vierte Anlagefläche (24) zum Abdichten des vierten beweglichen Ventilelements (20) umfasst;
oder wobei
mindestens eine vierte stromabwärtige Ventilkammerhälfte (22) in dem Sockel (1) ausgebildet ist, die zur Aufnahme eines vierten beweglichen Ventilelements (23) ausgelegt ist, das dazu ausgelegt ist, sich von einer Ventilöffnungsposition in eine Ventilschließposition zu bewegen;
wobei die mindestens eine vierte stromabwärtige Ventilkammerhälfte (22) mindestens eine vierte Anlagefläche (24) zum Abdichten des vierten beweglichen Ventilelements (20) umfasst.

9. Mikrofiltrationsbehälter (1) nach einem der Ansprüche 7 oder 8,
wobei in dem Sockel (1) mindestens ein stromaufwärtiger oder stromabwärtiger Ablassrohrabschnitt (25 oder 26) ausgebildet ist;
und wobei der mindestens eine stromaufwärtige oder
stromabwärtige Ablassrohrabschnitt (25 oder 26) in die dritte Ventilkammerhälfte (19) mündet;
oder
wobei in dem Sockel (1) mindestens ein stromabwärtiger oder stromaufwärtiger Ablassrohrabschnitt (26 oder 25) ausgebildet ist;
und wobei der mindestens eine stromabwärtige oder stromaufwärtige Ablassrohrabschnitt (26 oder 25) in die vierte Ventilkammerhälfte (22) mündet.

10. Mikrofiltrationsbehälter (1) nach einem der vorhergehenden Ansprüche,
wobei der Sockel (1) einen Sockelverbindungsflansch (27) zum Verbinden mit einer Behälterglocke (28) umfasst, um den Körper des Mikrofiltrationsbehälters (2) zu bilden;
und wobei die Behälterglocke (28) einen beweglichen Verbindungsgegenflansch (29) umfasst, der dazu ausgelegt ist, dem Sockelverbindungsflansch (27) gegenüberzuliegen;
und wobei der Flansch und der Gegenflansch (27, 29) von mindestens einer Schraubschelle (30) umgeben sind, die den Flansch und den Gegenflansch (27, 29) in einer umgekehrten "V"-förmigen Nut (31) davon aufnimmt, z. B. einer verstellbaren VBand-Schelle vom Typ einer I-Bolzen-Gerüstschelle/Drehkupplung.

11. Mikrofiltrationsbehälter (1) nach einem der vorhergehenden Ansprüche,
wobei der Sockel (1) eine Umfangshülse (32), eine obere Behälterbodenfläche (33) und eine äußere Unterseite (34) umfasst;
und wobei
die Umfangshülse (32) vier, paarweise gegenüberliegende Ebenen (35, 36, 37, 38) umfasst;
und wobei ein Fluideinlassrohrabschnitt (17) und ein Fluidauslassrohrabschnitt (18) in zwei gegenüberliegenden Ebenen (35, 37) vorgesehen sind;
und wobei eine dritte Ventilkammerhälfte (19) und eine vierte Ventilkammerhälfte (22) in zwei gegenüberliegende Ebenen (36, 38) münden;
und wobei eine erste Ventilkammerhälfte (7) und eine zweite Ventilkammerhälfte (10) in die obere Behälterbodenfläche (33) münden;
und wobei der Mikrofiltersitz (6) in die obere Behälterbodenfläche (33) mündet und fluidtechnisch mit der zweiten Ventilkammerhälfte (10) verbunden ist.

12. Mikrofiltrationsbehälter (1) nach einem der Ansprüche 9 und 11,
wobei der stromaufwärtige Ablassrohrabschnitt (25) und der stromabwärtige Abflussrohrabschnitt (26) in die äußere Unterseite (34) münden;
und wobei der stromaufwärtige Ablassrohrabschnitt (25) fluidtechnisch mit der dritten Ventilkammerhälfte (19) verbunden ist;
und wobei der stromabwärtige Ablassrohrabschnitt (26) fluidtechnisch mit der vierten Ventilkammerhälfte (22) verbunden ist.

13. Mikrofiltrationsbehälter (1) nach Anspruch 7,
wobei der Sockel (1) einen Umfangskanal (39) umfasst, der die dritte Ventilkammerhälfte (19) und die erste Ventilkammerhälfte (7) fluidtechnisch miteinander verbindet.

14. Mikrofiltrationsbehälter (1) nach einem der vorhergehenden Ansprüche,
wobei jede Ventilkammerhälfte (7, 10, 19, 22) durch eine Ventilgegenkammerhälfte (13, 14, 40, 41) abgedichtet ist, die mittels eines Gewindeflansches verbunden ist.

15. Mikrofiltrationsbehälter (1) nach einem der vorhergehenden Ansprüche,
wobei, wenn sich der Sockel (1) in der Gebrauchsposition befindet, jede Ventilkammerhälfte (7, 10, 19, 22) und/oder jede Ventilgegenkammerhälfte (13, 14, 40, 41) aseptische Geometrien aufweist, d. h. in der Lage ist, jede noch so geringe Fluidmenge abzulassen, d. h. frei von Fluidstauzonen ist.

16. Mikrofiltrationsbehälter (2) nach einem der Ansprüche 6 bis 13,
wobei, wenn sich der Sockel (1) in der Gebrauchsposition befindet, jeder Rohrabschnitt (17, 18, 25, 26) aseptische Geometrien aufweist, d. h. in der Lage ist, jede noch so geringe Fluidmenge abzulassen, d. h. frei von Fluidstauzonen ist.

17. Mikrofiltrationsbehälter (2) nach einem der vorhergehenden Ansprüche,
wobei der zylindrische Glockenkörper (42) und die Glockenkappe (43) fest miteinander verbunden sind, um ein einziges Stück zu bilden.

18. Mikrofiltrationsbehälter (2) nach einem der vorhergehenden Ansprüche,
wobei die Glockenkappe (43) ein monolithischer Körper ist, d. h. aus einem einzigen Stück gefertigt ist;
wobei mindestens eine fünfte Ventilkammerhälfte (44) in der Glockenkappe (43) ausgebildet ist, die zur Aufnahme eines fünften beweglichen Ventilelements (45) ausgelegt ist, das dazu ausgelegt ist, sich von einer Ventilöffnungsposition in eine Ventilschließposition zu bewegen;
wobei die mindestens eine fünfte Ventilkammerhälfte (43) mindestens eine fünfte Anlagefläche (46) zum Abdichten des fünften beweglichen Ventilelements (45) umfasst.

19. Mikrofiltrationsbehälter (2) nach einem der vorhergehenden Ansprüche,
wobei die Glockenkappe (43) ein monolithischer Körper ist, d. h. aus einem einzigen Stück gefertigt ist;
wobei mindestens eine sechste Ventilkammerhälfte (47) in der Glockenkappe (43) ausgebildet ist, die zur Aufnahme eines sechsten beweglichen Ventilelements (48) ausgelegt ist, das dazu ausgelegt ist, sich von einer Ventilöffnungsposition in eine Ventilschließposition zu bewegen;
wobei die mindestens eine sechste Ventilkammerhälfte (47) mindestens eine sechste Anlagefläche (49) zum Abdichten des sechsten beweglichen Ventilelements (48) umfasst.

20. Mikrofiltrationsbehälter (2) nach einem der vorhergehenden Ansprüche,
wobei die Glockenkappe (43) ein monolithischer Körper ist, d. h. aus einem einzigen Stück gefertigt ist;
wobei in der Glockenkappe (43) mindestens eine Füllstandssensorkammer (50) ausgebildet ist, die einen Füllstandssensorverbindungsflansch (51) für die Verbindung mit einer Klemmverbindungsadaptereinheit (52), d. h. einem Zero-Dead-Leg-Verbindungsflansch oder ZDL-Verbindung, umfasst und zum Verbinden eines Füllstandssensors (53) ausgelegt ist.

21. Mikrofiltrationsbehälter (2) nach einem der vorhergehenden Ansprüche,
wobei die Glockenkappe (43) ein monolithischer Körper ist, d. h. aus einem einzigen Stück gefertigt ist;
wobei in der Glockenkappe (43) mindestens ein Manometerverbindungsrohr (54) zum Verbinden eines Manometers (55) ausgebildet ist.

22. Mikrofiltrationsbehälter (2) nach einem der vorhergehenden Ansprüche,
wobei die Glockenkappe (43) ein monolithischer Körper ist, d. h. aus einem einzigen Stück gefertigt ist;
wobei in der Glockenkappe (43) mindestens ein Dichtheitsprüfungsrohrabschnitt (56) ausgebildet ist;
wobei der mindestens eine Dichtheitsprüfungsrohrabschnitt (56) fluidtechnisch mit der sechsten Ventilkammerhälfte (47) verbunden ist.

23. Mikrofiltrationsbehälter (2) nach einem der vorhergehenden Ansprüche,
wobei, wenn der Sockel (1) mit der Behälterglocke (28) verbunden ist, er eine innere Mikrofilterkammer (57) begrenzt, die mindestens einen Mikrofilter (3) aufnimmt, der den Fluideinlassrohrabschnitt (17) von dem Fluidauslassrohrabschnitt (18) trennt.

24. Mikrofiltrationsbehälter (2) nach einem der vorhergehenden Ansprüche,
wobei der Sockel (1) mindestens einen Blindsitz (58) zum Verbinden eines Behälterstützfußes (59) umfasst.

25. Mikrofiltrationsbehälter (2) nach einem der vorhergehenden Ansprüche,
wobei, wenn der Sockel nicht montiert ist, der Mikrofiltersitz (6) in dem Sockel (1) so angeordnet ist, dass er von der gegenüberliegenden Seite aus nach außen zeigt, bezogen auf die Ausrichtung der ersten Anlagefläche (9) nach außen.

26. Mikrofiltrationsbehälter (2) nach einem der vorhergehenden Ansprüche,
wobei, wenn der Sockel nicht montiert ist, der Mikrofiltersitz (6) in dem Sockel (1) so angeordnet ist, dass er in andere Richtungen nach außen zeigt, bezogen auf die Ausrichtung der ersten Anlagefläche (9) nach außen.

27. Mikrofiltrationsbehälter (2) nach einem der vorhergehenden Ansprüche,
wobei das erste bewegliche Ventilelement (8) in der ersten Ventilkammerhälfte (7) so aufgenommen ist, dass es sich entlang einer ersten Bewegungsbahn des beweglichen Ventilelements bewegt, um an der ersten Anlagefläche (9) anzuliegen.

28. Mikrofiltrationsbehälter (2) nach einem der vorhergehenden Ansprüche,
wobei sich der Mikrofiltersitz (6) von der ersten Anlagefläche (9) unterscheidet.

## Revendications

1. Récipient de microfiltration (2) comprenant une base (1) pour un récipient de microfiltration (2), ledit récipient contient au moins un microfiltre (3) et crée des passages de fluide qui forcent un fluide, passant d'une entrée de fluide (4) à une sortie de fluide (5), à passer à travers ledit microfiltre (3) ;
dans lequel ladite base (1) est un corps monolithique, c'est-à-dire réalisé en une seule pièce ;
dans lequel ladite base (1) comprend un siège de microfiltre (6) pour recevoir et fixer ledit au moins un microfiltre (3) ;
dans lequel ledit au moins un microfiltre (3) est logé dans ledit siège (6) ;
dans lequel ledit récipient de microfiltration (2) comprend une valve (60, 61, 62, 63, 64, 65) ;
ladite valve (60, 61, 62, 63, 64, 65) a une première demi-chambre de valve (7) et un premier élément de valve mobile (8) adapté pour se déplacer d'une position d'ouverture de valve à une position de fermeture de valve ;
dans lequel ladite au moins une première demi-chambre de valve (7) est obtenue dans ladite base (1) et reçoit ledit premier élément de valve mobile (8) ;
dans lequel ladite au moins une première demi-chambre de valve (7) comprend au moins une première surface de butée (9) pour sceller ledit élément de valve mobile (8) ;
dans lequel ledit récipient de microfiltration (2) comprend un récipient en forme de cloche (28) ;
dans lequel ledit récipient en forme de cloche (28) comprend un corps en forme de cloche cylindrique (42) dans lequel une première extrémité inférieure de celui-ci peut être raccordée de manière étanche à ladite base (1) et dans lequel une extrémité supérieure opposée de celui-ci est fermée par une calotte (43) ;
**caractérisé en ce que**
le siège de microfiltre (6) est obtenu dans la base (1) faisant face au côté opposé par rapport à la première surface de butée (9) qui est tournée vers l'extérieur.

2. Récipient de microfiltration (2), selon la revendication 1,
dans lequel ladite première demi-chambre de valve (7) est une demi-chambre de valve d'entrée de fluide ;
ou dans lequel
- ladite première demi-chambre de valve est une demi-chambre de valve de sortie de fluide.

3. Récipient de microfiltration (2), selon la revendication 1 ou 2,
dans lequel au moins une deuxième demi-chambre de valve (10) est obtenue dans ladite base (1), adaptée pour loger un deuxième élément de valve mobile (11) adapté pour se déplacer d'une position d'ouverture de valve à une position de fermeture de valve ;
dans lequel ladite au moins une deuxième demi-chambre de valve (10) comprend au moins une deuxième surface de butée (12) pour sceller ledit deuxième élément de valve mobile (11).

4. Récipient de microfiltration (1) selon la revendication précédente,
dans lequel ladite deuxième demi-chambre de valve (10) est une demi-chambre de valve de sortie de fluide ;
ou dans lequel
- ladite deuxième demi-chambre de valve est une demi-chambre de valve d'entrée de fluide.

5. Récipient de microfiltration (1) selon l'une quelconque des revendications 3 ou 4,
ladite première ou deuxième demi-chambre de valve (7 ou 10) est adaptée pour être couplée et scellée par une première ou deuxième contre-demi-chambre de valve (13 ou 14) de manière à former une première ou deuxième chambre (15 ou 16) de première ou deuxième valve recevant ledit premier ou deuxième élément de valve mobile (8 ou 11).

6. Récipient de microfiltration (1) selon l'une quelconque des revendications 3 à 5,
dans lequel au moins une section de tuyau d'entrée ou de sortie de fluide (17 ou 18) est obtenue dans ladite base (1) ;
et dans lequel ladite au moins une section de tuyau d'entrée ou de sortie de fluide (17 ou 18) débouche dans ladite première demi-chambre de valve (7) ;
ou
dans lequel au moins une section de tuyau de sortie ou d'entrée de fluide (18 ou 17) est obtenue dans ladite base (1) ;
et dans lequel ladite au moins une section de tuyau de sortie ou d'entrée de fluide (18 ou 17) débouche dans ladite deuxième demi-chambre de valve (10).

7. Récipient de microfiltration (1) selon l'une quelconque des revendications précédentes,
dans lequel au moins une troisième demi-chambre de valve (19) est obtenue dans ladite base (1), adaptée pour loger un troisième élément de valve mobile (20) adapté pour se déplacer d'une position d'ouverture de valve à une position de fermeture de valve ;
dans lequel ladite au moins une troisième demi-chambre de valve (19) comprend au moins une troisième surface de butée (21) pour sceller ledit troisième élément de valve mobile (20) ;
ou dans lequel
au moins une troisième demi-chambre de valve de vidange amont (19) est obtenue dans ladite base (1), adaptée pour loger un troisième élément de valve mobile (20) adapté pour se déplacer d'une position d'ouverture de valve à une position de fermeture de valve ;
dans lequel ladite au moins une troisième demi-chambre de valve amont (19) comprend au moins une troisième surface de butée (21) pour sceller ledit troisième élément de valve mobile (20).

8. Récipient de microfiltration (1) selon l'une quelconque des revendications précédentes,
dans lequel au moins une quatrième demi-chambre de valve (22) est obtenue dans ladite base (1), adaptée pour loger un quatrième élément de valve mobile (23) adapté pour se déplacer d'une position d'ouverture de valve à une position de fermeture de valve ;
dans lequel ladite au moins une quatrième demi-chambre de valve (22) comprend au moins une quatrième surface de butée (24) pour sceller ledit quatrième élément de valve mobile (20) ;
ou dans lequel
au moins une quatrième demi-chambre de valve aval (22) est obtenue dans ladite base (1), adaptée pour loger un quatrième élément de valve mobile (23) adapté pour se déplacer d'une position d'ouverture de valve à une position de fermeture de valve ;
dans lequel ladite au moins une quatrième demi-chambre de valve aval (22) comprend au moins une quatrième surface de butée (24) pour sceller ledit quatrième élément de valve mobile (20).

9. Récipient de microfiltration (1) selon l'une quelconque des revendications 7 ou 8,
dans lequel au moins une section de tuyau de vidange amont ou aval (25 ou 26) est obtenue dans ladite base (1) ;
et dans lequel ladite au moins une section de tuyau de vidange amont ou aval (25 ou 26) débouche dans ladite troisième demi-chambre de valve (19) ;
ou
dans lequel au moins une section de tuyau de vidange en aval ou en amont (26 ou 25) est obtenue dans ladite base (1) ;
et dans lequel ladite au moins une section de tuyau de vidange en aval ou en amont (26 ou 25) débouche dans ladite quatrième demi-chambre de valve (22).

10. Récipient de microfiltration (1) selon l'une quelconque des revendications précédentes,
dans lequel ladite base (1) comprend une bride de liaison de base (27) pour la liaison avec un récipient en forme de cloche (28) pour former le corps dudit récipient de microfiltration (2) ;
et dans lequel ledit récipient en forme de cloche (28) comprend une contre-bride de liaison mobile (29) adaptée pour faire face à ladite bride de liaison de base (27) ;
et dans lequel ladite bride et ladite contre-bride (27, 29) sont entourées par au moins une pince de serrage de vis (30), qui reçoit ladite bride et ladite contre-bride (27, 29) dans une rainure en forme de «V» inversé (31) de celles-ci, par exemple, une pince réglable en V du type pince d'échafaudage à boulon en I/coupleur pivotant.

11. Récipient de microfiltration (1) selon l'une quelconque des revendications précédentes,
dans lequel ladite base (1) comprend un manchon périphérique (32), une surface de fond de récipient supérieure (33), une surface inférieure extérieure (34) ;
et dans lequel
ledit manchon périphérique (32) comprend quatre nivellements (35, 36, 37, 38) opposés deux à deux ;
et dans lequel une section de tuyau d'entrée de fluide (17) et une section de tuyau de sortie de fluide (18) sont prévues dans deux nivellements opposés (35, 37) ;
et dans lequel une troisième demi-chambre de valve (19) et une quatrième demi-chambre de valve (22) débouchent dans deux nivellements opposés (36, 38) ;
et dans lequel une première demi-chambre de valve (7) et une deuxième demi-chambre de valve (10) débouchent dans ladite surface de fond de récipient supérieure (33) ;
et dans lequel le siège de microfiltre (6) débouche dans ladite surface de fond de récipient supérieure (33) et est reliée de manière fluidique avec ladite deuxième demi-chambre de valve (10).

12. Récipient de microfiltration (1) selon l'une quelconque des revendications 9 et 11,
dans lequel ladite section de tuyau de vidange amont (25) et ladite section de tuyau de vidange aval (26) débouchent dans ladite surface inférieure extérieure (34) ;
et dans lequel ladite section de tuyau de vidange amont (25) est reliée de manière fluidique à ladite troisième demi-chambre de valve (19) ;
et dans lequel ladite section de tuyau de vidange aval (26) est reliée de manière fluidique à ladite quatrième demi-chambre de valve (22).

13. Récipient de microfiltration (1) selon la revendication 7, dans lequel ladite base (1) comprend un canal périphérique (39), qui relie de manière fluide ladite troisième demi-chambre de valve (19) et ladite première demi-chambre de valve (7).

14. Récipient de microfiltration (1) selon l'une quelconque des revendications précédentes,
dans lequel chaque demi-chambre de valve (7, 10, 19, 22) est scellée par une contre-demi-chambre de valve (13, 14, 40, 41) reliée au moyen d'une bride filetée.

15. Récipient de microfiltration (1) selon l'une quelconque des revendications précédentes,
dans lequel, lorsque la base (1) est dans la position d'utilisation, chaque demi-chambre de valve (7, 10, 19, 22) et/ou chaque contre-demi-chambre de valve (13, 14, 40, 41) a des géométries aseptiques, c'est-à-dire capables de vider chaque quantité minimale de fluide, c'est-à-dire dépourvues de zones de stagnation de fluide.

16. Récipient de microfiltration (2), selon l'une quelconque des revendications 6 à 13,
dans lequel, lorsque la base (1) est dans la position d'utilisation, chaque section de tuyau (17, 18, 25, 26) a des géométries aseptiques, c'est-à-dire capables de vider chaque quantité minimale de fluide, c'est-à-dire dépourvues de zones de stagnation de fluide.

17. Récipient de microfiltration (2) selon l'une quelconque des revendications précédentes,
dans lequel ledit corps en forme de cloche cylindrique (42) et ladite une calotte (43) sont fermement reliés pour former une seule pièce.

18. Récipient de microfiltration (2) selon l'une quelconque des revendications précédentes,
dans lequel ladite calotte (43) est un corps monolithique, c'est-à-dire réalisé en une seule pièce ;
dans lequel au moins une cinquième demi-chambre de valve (44) est obtenue dans ladite calotte (43), adaptée pour loger un cinquième élément de valve mobile (45) adapté pour se déplacer d'une position d'ouverture de valve à une position de fermeture de valve ;
dans lequel ladite au moins une cinquième demi-chambre de valve (43) comprend au moins une cinquième surface de butée (46) pour sceller ledit cinquième élément de valve mobile (45).

19. Récipient de microfiltration (2) selon l'une quelconque des revendications précédentes,
dans lequel ladite calotte (43) est un corps monolithique, c'est-à-dire réalisé en une seule pièce ;
dans lequel au moins une sixième demi-chambre de valve (47) est obtenue dans ladite calotte (43), adaptée pour loger un sixième élément de valve mobile (48) adapté pour se déplacer d'une position d'ouverture de valve à une position de fermeture de valve ;
dans lequel ladite au moins une sixième demi-chambre de valve (47) comprend au moins une sixième surface de butée (49) pour sceller ledit sixième élément de valve mobile (48).

20. Récipient de microfiltration (2) selon l'une quelconque des revendications précédentes,
dans lequel ladite calotte (43) est un corps monolithique, c'est-à-dire réalisé en une seule pièce ;
dans lequel au moins une chambre de capteur de niveau (50) est obtenue dans ladite calotte (43), comprenant une bride de liaison de capteur de niveau (51) pour la liaison avec une unité d'adaptateur de liaison de bride (52), c'est-à-dire une bride de liaison à volume mort nul, ou liaison ZDL (en Anglais « Zero Dead Leg » pour ZDL), et adaptée pour relier un capteur de niveau (53).

21. Récipient de microfiltration (2) selon l'une quelconque des revendications précédentes,
dans lequel ladite calotte (43) est un corps monolithique, c'est-à-dire réalisé en une seule pièce ;
dans lequel au moins un tuyau de liaison de manomètre (54) est obtenu dans ladite calotte (43) pour la liaison d'un manomètre (55).

22. Récipient de microfiltration (2) selon l'une quelconque des revendications précédentes,
dans lequel ladite calotte (43) est un corps monolithique, c'est-à-dire réalisé en une seule pièce ;
dans lequel au moins une section de tuyau d'essai d'intégrité (56) est obtenue dans ladite calotte (43) ;
dans lequel ladite au moins une section de tuyau d'essai d'intégrité (56) est reliée de manière fluidique à ladite sixième demi-chambre de valve (47).

23. Récipient de microfiltration (2) selon l'une quelconque des revendications précédentes,
dans lequel, lorsque ladite base (1) est reliée audit récipient en forme de cloche (28), elle délimite une chambre de microfiltre intérieure (57) qui reçoit au moins un microfiltre (3) qui sépare ladite section de tuyau d'entrée de fluide (17) de ladite section de tuyau de sortie de fluide (18).

24. Récipient de microfiltration (2) selon l'une quelconque des revendications précédentes,
dans lequel ladite base (1) comprend au moins un siège aveugle (58) pour la liaison d'un pied de support de récipient (59).

25. Récipient de microfiltration (2) selon l'une quelconque des revendications précédentes,
dans lequel, lorsque la base n'est pas montée, le siège de microfiltre (6) est disposé dans la base (1) tourné vers l'extérieur à partir du côté opposé par rapport à la façon dont la première surface de butée (9) est tournée vers l'extérieur.

26. Récipient de microfiltration (2) selon l'une quelconque des revendications précédentes,
dans lequel, lorsque la base n'est pas montée, le siège de microfiltre (6) est disposé dans la base (1) tourné vers l'extérieur vers différentes directions par rapport à la façon dont la première surface de butée (9) est tournée vers l'extérieur.

27. Récipient de microfiltration (2) selon l'une quelconque des revendications précédentes,
dans lequel, le premier élément de valve mobile (8) est logé dans la première demi-chambre de valve (7) de manière à se déplacer le long d'un premier trajet de translation d'élément de valve mobile pour buter sur la première surface de butée (9).

28. Récipient de microfiltration (2) selon l'une quelconque des revendications précédentes,
dans lequel, le siège de microfiltre (6) diffère de la première surface de butée (9).
